# FASCICULE DE BREVET EUROPEEN

(11) **EP 2 529 122 B1**
(45) Date de publication et mention de la délivrance du brevet: **16.08.2017**
(21) Numéro de dépôt: 11705934.5
(22) Date de dépôt: 26.01.2011
(51) Int. Cl.: F15D 1/12, B64C 23/00, H05H 1/54

(54) **PROCEDE ET DISPOSITIF DE MODULATION DU DEBIT MASSIQUE D'UN ECOULEMENT DE GAZ**
VERFAHREN UND VORRICHTUNG ZUR MODULATION EINES MASSENFLUSSES EINES GASSTROMS
METHOD AND DEVICE FOR MODULATING THE MASS FLOW OF A GAS FLOW

(30) Priorité: 27.01.2010 FR 1000298
(43) Date de publication de la demande: 05.12.2012
(73) Titulaire: Centre National de la Recherche Scientifique (C.N.R.S.), 75794 Paris Cedex 16 (FR); Université De Poitiers, 86034 Poitiers Cedex (FR)
(72) Inventeur: BONNET, Jean-Paul, F-86000 Poitiers (FR); LEBEDEV, Anton, F-86440 Migné-Auxances (FR); MOREAU, Eric, F-86380 Vendeuvre (FR); BENARD, Nicolas, F-86180 Buxerolles (FR)
(74) Mandataire: Novagraaf Technologies
(86) Numéro de dépôt international: PCT/FR2011/050154
(87) Numéro de publication internationale: WO 2011/092429

(56) Documents cités:
- EP-A2- 1 672 966
- FR-A1- 2 532 081
- US-A- 4 882 465
- US-A- 4 909 914

## Description

### DOMAINE TECHNIQUE DE L'INVENTION

L'invention se rapporte à un procédé et un dispositif de modulation du débit massique d'un écoulement de gaz.

### ETAT DE LA TECHNIQUE ANTERIEURE

Dans le domaine de l'aéronautique, il est connu d'utiliser des jets de gaz pour contrôler un écoulement. Ainsi les documents US2002/0195526 ou EP1623922 décrivent-t-ils l'utilisation d'actionneurs pulsés émettant des micro-jets de gaz pour contrôler des écoulements. Ces micro-jets de gaz permettent notamment de contrôler la forme, la direction, la section ou encore l'enveloppe des écoulements.

Pour cela, différents types d'actionneurs sont connus. On connaît par exemple des actionneurs à jets synthétiques tels que décrits dans le document US2002/0195526. Cependant, ces actionneurs ne permettent pas produire des micro-jets à vitesse élevée.

On connaît également des actionneurs qui fonctionnent à l'aide de vannes. Ces actionneurs peuvent produire des micro-jets présentant une grande vitesse d'éjection mais ils ne peuvent pas travailler à fréquence élevée.

Par ailleurs, du fait de l'existence de parties en mouvement, les actionneurs de l'état de la technique s'usent rapidement. En outre, ils ne permettent pas de travailler à grande fréquence et grande vitesse, ce qui est requis pour les essais en soufflerie et certaines applications aéronautiques ou automobiles.

Par ailleurs, le brevet US 4 882 465 décrit un réacteur à plasma dans lequel la position de l'arc électrique est contrôlée par la géométrie du réacteur malgré les variations de débit du gaz entrant afin d'optimiser la poussée.

### EXPOSE DE L'INVENTION

L'invention vise à remédier aux inconvénients de l'état de la technique en proposant un procédé et un actionneur aptes à produire un jet d'air pulsé à des vitesses et des fréquences élevées.

L'écoulement de gaz à l'entrée du conduit est de préférence permanent.

Avantageusement, le conduit est formé par un rétrécissement du canal dans lequel l'écoulement de gaz présente un nombre de Mach égal à 1. Ce rétrécissement est aussi appelé « col » ou « col sonique » puisque le nombre de Mach de l'écoulement de gaz dans ce rétrécissement est égal à un. Le fait de se placer dans ce col permet de contrôler précisément les conditions de l'écoulement.

Le procédé selon l'invention permet une modulation de 30 à 60 % du débit massique. De manière surprenante, on constate que la variation du débit massique selon l'invention suite à une décharge d'une énergie donnée est supérieure à la variation de débit attendue pour une telle énergie (relativement faible) mise en jeu.

Avantageusement, la décharge électrique est telle que la température de l'écoulement de gaz dans le conduit varie de 60% à 120% lors de la décharge électrique.

Selon différents modes de réalisation de l'invention :
- la décharge électrique a une durée supérieure à 10⁻⁷ s. En effet, cette durée permet de transférer une énergie thermique nécessaire à l'écoulement sur des temps très courts; les temps de réponse sont alors fixés par la dynamique de l'écoulement, qui est très rapide puisque les vitesses considérées sont soniques ;
- la décharge électrique est périodique et présente une fréquence comprise entre 1 Hz et 50 kHz ce qui permet de pulser l'écoulement de gaz en sortie du dispositif selon l'invention aux fréquences utilisées dans l'aéronautique ;
- l'écoulement de gaz a un débit massique compris entre 1 g/seconde et 100 g/seconde .

L'invention concerne également un procédé de contrôle d'un écoulement principal qui comporte les étapes suivantes :
- établir un écoulement de gaz à travers un canal, le canal comportant un conduit dans lequel le nombre de Mach de l'écoulement de gaz est égal à 1,
- émettre au moins une décharge électrique dans le conduit de façon à créer au moins une zone de plasma dans l'écoulement de gaz,
- diriger l'écoulement de gaz en sortie du canal vers un écoulement principal s'écoulant dans une direction principale donnée, en orientant l'écoulement de gaz en sortie du canal de manière à ce que la direction d'écoulement de l'écoulement de gaz en sortie du canal soit sécante ou parallèle avec la direction principale,
- contrôler l'écoulement principal en faisant varier le débit massique de l'écoulement de gaz dans le canal.

Dans ce mode de réalisation, l'écoulement de gaz, dont le débit massique est modulé, est utilisé pour contrôler un autre écoulement, dit écoulement principal. En effet, l'écoulement de gaz est injecté dans l'écoulement principal ce qui permet, en faisant varier le débit massique de l'écoulement de gaz, par exemple à une fréquence choisie, de contrôler l'écoulement principal et notamment son décollement, sa direction ou encore sa forme ainsi que les bruits ou vibrations émis par ledit écoulement principal.

Dans ce document, les mots aval et amont se réfèrent la direction d'écoulement de l'écoulement de gaz.

L'invention concerne également un dispositif de modulation du débit massique d'un écoulement de gaz, le dispositif comprenant un canal comportant un conduit dimensionné de façon à ce que l'écoulement de gaz dans le conduit soit sonique, le dispositif comprenant en outre des moyens d'émission d'au moins une décharge électrique dans le conduit, la décharge électrique étant apte à créer une zone de plasma dans l'écoulement de gaz.

Le fait de créer un plasma permet d'avoir une augmentation rapide et volumique de la température. Cette augmentation de température provoque une variation du débit massique de l'écoulement de gaz dans le conduit puisque l'écoulement de gaz est sonique dans le conduit.

Avantageusement, la décharge électrique est filamentaire, diffuse ou en régime d'arc.

Avantageusement, le conduit est constitué par un rétrécissement du canal, l'écoulement de gaz présentant un nombre de Mach égal à 1 dans le conduit.

Avantageusement, les moyens d'émission de la décharge électrique sont positionnés de façon à créer la zone de plasma dans le conduit.

Selon un mode de réalisation préférentiel de l'invention, le dispositif comprend en outre des moyens de commande aptes à piloter les moyens d'émission de la décharge électrique de façon à ce que les moyens d'émission de la décharge électrique émettent une décharge électrique périodiquement. Ainsi le dispositif selon l'invention permet de produire un écoulement de gaz pulsé à une fréquence choisie ou d'adopter toute évolution temporelle à la demande (duty-cycle, formes non sinusoidales).

Selon différents modes de réalisation :
- la décharge électrique présente une tension comprise entre 1 kV et 50 kV et une intensité moyenne comprise entre 1 mA et 500 mA ;
- les moyens d'émission de la décharge électrique comportent une première électrode située au centre du conduit et une seconde électrode constituée par la surface intérieure du conduit ; ces moyens de création de la décharge électrique sont particulièrement simples à réaliser ;
- le conduit et la première électrode présentent chacun une section transversale circulaire ce qui permet d'avoir une augmentation de température homogène;
- le canal présente un diamètre compris entre 0.5 mm et 3 mm, ce qui permet de produire des micro-jets de gaz en sortie du canal dont le diamètre est compris entre 0.5 mm et 3 mm, ce qui permet d'utiliser ces micro-jets dans le contrôle des décollements sur automobile ou avion;
- le canal présente une section transversale rectangulaire ce qui est particulièrement avantageux lorsque le dispositif est utilisé dans l'aéronautique et en particulier dans des ailes d'avion puisque, ainsi, il présente un encombrement minimum.

Le procédé et le dispositif selon l'invention permettent donc de produire des jets pulsés à grande vitesse, c'est-à-dire dont la vitesse approche la vitesse du son.

Les énergies électriques mises en jeu pour créer la décharge électrique nécessaire à la modulation de micro-jets de débit de l'ordre du gramme par seconde sont de l'ordre de 100 W, pouvant atteindre 1000 W au maximum.

Le procédé et le dispositif selon l'invention permettent donc de produire des jets pulsés à fréquences élevées.

L'invention concerne également l'utilisation d'un dispositif tel que décrit précédemment pour contrôler un écoulement principal, l'écoulement principal s'écoulant suivant une direction principale d'écoulement, le dispositif émettant un jet de gaz suivant une direction d'écoulement sécante à la direction principale d'écoulement, ou parallèle audit écoulement principal ou encore situé dans une région judicieusement choisie de l'écoulement principal pour en modifier le comportement temporel, le débit massique du jet de gaz étant modulé par le dispositif.

### BREVE DESCRIPTION DES FIGURES

D'autres caractéristiques et avantages de l'invention ressortiront à la lecture de la description qui suit, en référence aux figures annexées, qui illustrent :
- la figure 1, une vue schématique en perspective d'une coupe longitudinale d'un dispositif selon un premier mode de réalisation de l'invention ;
- la figure 2, une vue schématique en perspective d'une coupe longitudinale d'un dispositif selon un second mode de réalisation de l'invention ;
- la figure 3, une vue schématique en perspective d'une coupe longitudinale d'un dispositif selon un troisième mode de réalisation de l'invention ;
- la figure 4, une vue schématique en perspective d'une coupe longitudinale d'un dispositif selon un quatrième mode de réalisation de l'invention ;
- la figure 5, un schéma de principe d'un procédé de contrôle d'un écoulement selon un mode de réalisation de l'invention.

Pour plus de clarté, les éléments identiques ou similaires sont repérés par des signes de référence identiques sur l'ensemble des figures.

### DESCRIPTION DETAILLEE D'UN MODE DE REALISATION

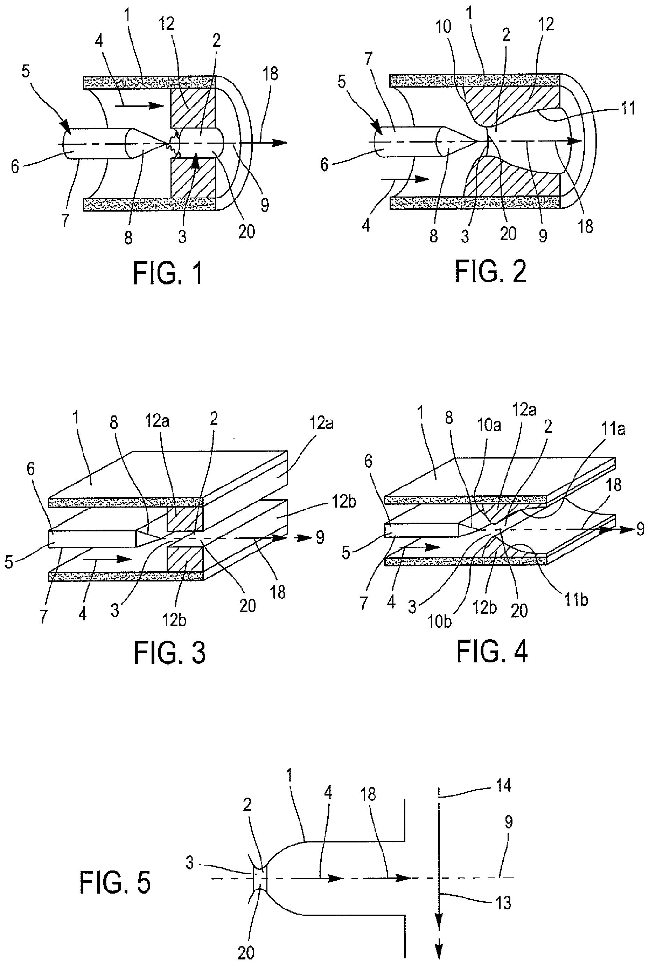

Le dispositif de la figure 1 comporte un canal 1 de section cylindrique. Ce canal 1 comporte un conduit 3. Le conduit 3 est constitué par un rétrécissement 20 du canal 1. Ce rétrécissement 20 est également appelé col ou col sonique.

Plus précisément, le conduit 3 est formé par un anneau cylindrique 12 de diamètre interne inférieur au diamètre interne du canal 1 de sorte que le conduit 3 constitue un rétrécissement du canal 1. Le canal 1 et le conduit 3 sont traversés par un écoulement de gaz 4 qui s'écoule suivant une direction d'écoulement 9. L'écoulement de gaz 4 est permanent.

L'écoulement de gaz 4 et le conduit 3 sont choisis de façon à ce que le nombre de Mach de l'écoulement de gaz soit égal à 1 dans le conduit 3. Dans cet exemple, l'écoulement de gaz est un écoulement d'air. Le dispositif comprend en outre des moyens d'émission d'une décharge électrique 5. Les moyens d'émission 5 d'une décharge électrique sont constitués ici d'une part par une électrode 6 placée au centre du canal 1 et alignée avec la direction d'écoulement 9 et d'autre part par les parois du conduit 3 qui sont constituées de préférence d'acier. L'électrode 6 est constituée de préférence de tungstène. L'acier et le tungstène ont été choisis pour pouvoir résister à l'érosion. L'électrode 6 est constituée d'un corps cylindrique 7 au bout duquel est montée une pointe 8. L'électrode 6 est placée de façon à créer une zone de plasma 2 dans le conduit 3.

En l'absence d'une décharge électrique, l'écoulement de gaz 4 traverse en permanence le conduit 3 de façon à ce que le nombre de Mach de l'écoulement de gaz 4 dans le conduit soit égal à 1.

Lorsqu'une décharge électrique est émise par les moyens d'émission, une zone de plasma 2 est créée dans le conduit 3, ce qui modifie la température et le débit massique de l'écoulement de gaz 4. Les moyens d'émission 5 de la décharge électrique sont reliés à des moyens de commande qui pilotent les moyens d'émission de façon à ce que les moyens d'émission 5 émettent une décharge électrique de manière périodique. Ainsi, on obtient en sortie du canal 1 un jet de gaz 18 pulsé dont le débit massique est modulé. Dans cet exemple, le jet de gaz 18 a un diamètre de 1 mm de diamètre. Le débit massique du jet de gaz 18 en sortie du dispositif varie d'environ 30% entre le moment où il n'y a pas de décharge électrique et le moment où une décharge électrique est émise. Pour cela, la puissance utilisée pour la décharge électrique filamentaire est de l'ordre de 100 W, avec une valeur maximum de 1000 W. Cette décharge peut être filamentaire, avec un diamètre de 100 mm environ, ou diffuse. Dans ce cas, son diamètre est égal au diamètre du jet de sortie. Le courant utilisé pour émettre une telle décharge présente une tension de 5 kV environ et une intensité moyenne typiquement d'une vingtaine de milliampères, pouvant atteindre plusieurs centaines de milliampères.

Ce dispositif permet de contrôler un écoulement de gaz, et en particulier son débit massique, de manière simple, fiable. En outre, ce dispositif permet d'émettre un jet de gaz pulsé à une fréquence très grande. En outre, ce dispositif permet de pulser un jet de gaz sans utiliser de composant mécanique et par conséquent, il résiste bien à l'usure et est facilement miniaturisable.

Ce dispositif permet également des économies d'énergie.

La figure 2 représente un dispositif selon un autre mode de réalisation de l'invention. Le dispositif de la figure 2 comporte également un canal 1 de section cylindrique. Ce canal 1 comporte un conduit 3. Le conduit 3 est formé rétrécissement du canal 1. Pour cela, le conduit 3 est formé par un anneau 12 de section longitudinale asymétrique. Cet anneau 12 présentant un diamètre interne inférieur au diamètre interne du canal 1 de sorte que le conduit 3 constitue un rétrécissement du canal 1. Le canal 1 et le conduit 3 sont traversés par un écoulement de gaz 4 qui s'écoule suivant une direction d'écoulement 9. Dans ce mode de réalisation, l'anneau 12 présente une première face 10 de pente très abrupte qui fait face à l'écoulement et une seconde face 11 de pente moins importante si bien que lorsque l'on se déplace dans le conduit en suivant le sens de l'écoulement de gaz, le canal 1 présente d'abord un rétrécissement très rapide jusqu'au conduit 3 puis un élargissement progressif à partir du conduit 3. Le conduit 3 est situé dans la partie la plus rétrécie de l'anneau 12. Ce dispositif comprend également des moyens d'émission d'une décharge électrique 5. Les moyens d'émission 5 de la décharge électrique sont constitués d'une part par une électrode 6 placée au centre du canal 1 et alignée avec la direction d'écoulement 9 et d'autre part par les parois du conduit 3 qui sont constituées d'acier. L'électrode 6 est constituée de préférence de tungstène. L'acier et le tungstène ont été choisis pour pouvoir résister à l'érosion. L'électrode 6 est constituée d'un corps cylindrique 7 au bout duquel est montée une pointe 8. L'électrode 6 est placée de façon à créer une zone de plasma 2 dans le conduit 3.

La figure 3 représente un dispositif selon un autre mode de réalisation dans lequel l'écoulement de gaz 4 a lieu dans un canal 1 qui présente une section longitudinale rectangulaire et une section transversale rectangulaire. À l'intérieur de ce canal 1 se trouvent deux poutres 12a et 12b de sections longitudinales rectangulaires. Les deux poutres 12a et 12b sont situées l'une au-dessus de l'autre de façon à former un rétrécissement 20 du canal 1 dans lequel se trouve le conduit 3. Le dispositif de la figure 3 comporte en outre des moyens d'émission d'une décharge électrique 5. Les moyens d'émission 5 d'une décharge électrique sont constitués d'une part par une électrode 6 placée au centre du canal 1 et d'autre part par les parois du conduit 3 qui sont constituées de préférence d'acier. L'électrode 6 est constituée de préférence de tungstène. L'électrode 6 est constituée d'un corps parallélépipédique 7 au bout duquel est montée une pointe 8 en forme de pyramide. L'électrode 6 est placée de façon à créer un plasma dans le conduit 3.

La figure 4 représente un dispositif selon un autre mode de réalisation dans lequel l'écoulement de gaz 4 a lieu dans un canal 1 qui présente une section longitudinale rectangulaire et une section transversale rectangulaire. L'écoulement de gaz 4 s'écoule suivant une direction 9 d'écoulement. À l'intérieur de ce canal 1 se trouvent deux poutres 12a et 12b de sections longitudinales asymétriques. Les deux poutres 12a et 12b présentent chacune une face 10a et 10b qui fait face à l'écoulement de gaz 4 et dont la pente est très importante et une face 11 a et 11 b de pente moins importante. Les deux poutres 12a et 12b sont situées l'une au-dessus de l'autre de façon à former un rétrécissement du canal 1 dans lequel se trouve le conduit 3. Ainsi, lorsque l'on se déplace dans le canal 1 dans le sens de l'écoulement de gaz, le canal rétrécit d'abord très rapidement jusqu'au conduit 3 puis il s'élargit à nouveau à partir du conduit 3 mais de manière plus progressive. Le dispositif de la figure 4 comporte en outre des moyens d'émission d'une décharge électrique 5. Les moyens d'émission 5 d'une décharge électrique sont constitués d'une part par une électrode 6 placée au centre du canal 1 et d'autre part par les parois du conduit 3 qui sont constituées de préférence d'acier. L'électrode 6 est constituée de préférence de tungstène. L'électrode 6 est constituée d'un corps parallélépipédique 7 au bout duquel est montée une pointe 8 en forme de pyramide. L'électrode 6 est placée de façon à créer un plasma dans le conduit 3.

La figure 5 illustre schématiquement un procédé de contrôle d'un écoulement principal 13 selon un mode de réalisation de l'invention. L'écoulement principal 13 s'écoule suivant une direction principale d'écoulement 14. Dans ce procédé de contrôle, un écoulement de gaz 4 s'écoule suivant une direction d'écoulement 9 et traverse un conduit 3 situé dans un canal 1. Le canal 1 comporte un conduit 3 formé par un rétrécissement 20 dans lequel le nombre de Mach de l'écoulement est égal à un. L'écoulement de gaz 4 et le conduit 3 sont orientés de façon à ce que la direction d'écoulement 9 soit sécante à la direction principale d'écoulement 14, et plus précisément que la direction d'écoulement 9 soit perpendiculaire à la direction principale d'écoulement 14 ; dans d'autres applications la direction d'écoulement 9 peut être parallèle à la direction principale de l'écoulement 14 ; encore dans d'autres applications, la direction d'écoulement 9 peut avoir des orientations choisies en fonction des caractéristiques de l'écoulement 14 dans leur sensibilité maximale aux perturbations.

Par exemple, lorsque le procédé de contrôle selon l'invention est utilisé pour contrôler le décollement sur une aile, la direction d'écoulement 9 est de préférence choisie de façon à ce qu'elle soit perpendiculaire à la direction principale de l'écoulement 14.

Lorsque le procédé de contrôle selon l'invention est utilisé pour contrôler le bruit de jet, la direction d'écoulement 9 est de préférence choisie de façon à ce qu'elle soit quasiment parallèle au bord de fuite de l'écoulement ou de façon à ce que l'angle entre la direction d'écoulement et la direction principale d'écoulement soit inférieure à 50°.

Lorsque le procédé de contrôle selon l'invention est utilisé pour contrôler un écoulement de cavité, le dispositif selon l'invention est de préférence placé dans le creux de l'écoulement.

Enfin, le procédé de contrôle selon l'invention comprend une étape d'émission périodique d'une décharge électrique de façon à créer périodiquement une zone de plasma 2 dans le conduit 3. Cette zone de plasma 2 permet de moduler de façon périodique le débit massique de l'écoulement de gaz 4, si bien qu'en sortie du canal 1, on obtient un jet de gaz 18 pulsé à une fréquence égale à la fréquence d'émission de la décharge électrique. Ce jet de gaz 18 pulsé entre en collision avec l'écoulement principal 13 ce qui permet de modifier la forme, la direction, le décollement ou encore l'enveloppe de l'écoulement principal 13.

## Revendications

1. Procédé de contrôle du débit massique d'un écoulement de gaz (4), comprenant les étapes suivantes :
- établir un écoulement de gaz (4) à travers un canal (1), le canal (1) comportant un conduit (3) dans lequel le nombre de Mach de l'écoulement de gaz (4) est égal à 1, tel que l'écoulement soit permanent en amont du conduit,
- émettre au moins une décharge électrique dans le conduit (3) de façon à créer au moins une zone de plasma dans l'écoulement de gaz (4),
**caractérisé en ce que** la décharge électrique est périodique de telle sorte que le débit massique de l'écoulement en aval du conduit est contrôlé par la décharge électrique via l'augmentation en température de l'écoulement de gaz.

2. Procédé selon la revendication 1, **caractérisé en ce que** le conduit (3) est formé par un rétrécissement (20) du canal dans lequel l'écoulement de gaz (4) présente un nombre de Mach égal à 1.

3. Procédé selon l'une quelconque des revendications précédentes, **caractérisé en ce que** la décharge électrique a une durée supérieure à 10⁻⁷ s.

4. Procédé selon l'une quelconque des revendications précédentes, **caractérisé en ce que** la décharge électrique est périodique et présente une fréquence comprise entre 1 Hz et 50 kHz.

5. Procédé selon l'une quelconque des revendications précédentes, **caractérisé en ce que** l'écoulement de gaz (4) a un débit massique dans le canal (1) compris entre 1 g/seconde et 100 g/seconde.

6. Procédé de contrôle selon l'une quelconque des revendications précédentes, **caractérisé en ce qu'**il comporte en outre les étapes suivantes:
- diriger l'écoulement de gaz (4) en sortie du canal (1) vers un écoulement principal (13) s'écoulant dans une direction principale (14) donnée, en orientant l'écoulement de gaz (4) en sortie du canal (1) de manière à ce que la direction d'écoulement (9) de l'écoulement de gaz (4) en sortie du canal (1) soit sécante ou parallèle avec la direction principale (14),
- contrôler l'écoulement principal (13) en faisant varier le débit massique de l'écoulement de gaz dans le canal (1).

7. Dispositif de modulation du débit massique d'un écoulement de gaz (4), le dispositif comprenant un canal (1) comportant un conduit (3) dimensionné de façon à ce que la vitesse de l'écoulement de gaz (4) dans le conduit (3) soit égale à 1 Mach et que l'écoulement soit permanent en amont du conduit, des moyens d'émission (5) d'au moins une décharge électrique dans le conduit (3), **caractérisé en ce que** le dispositif comprend en outre des moyens de commande aptes à piloter les moyens d'émission (5) de la décharge électrique de façon à ce que les moyens d'émission (5) de la décharge électrique émettent une décharge électrique périodique et apte à créer une zone de plasma (2) dans l'écoulement de gaz (4) contrôlant le débit massique de l'écoulement en aval du conduit via l'augmentation en température de l'écoulement de gaz.

8. Dispositif selon la revendication précédente, **caractérisé en ce que** le conduit (3) est constitué par un rétrécissement (20) du canal (1), l'écoulement de gaz (4) présentant un nombre de Mach égal à 1 dans le conduit (3).

9. Dispositif selon l'une quelconque des revendications 7 à 8, **caractérisé en ce que** la décharge électrique présente une tension comprise entre 1 kV et 50 kV et une intensité comprise entre 1 mA et 500 mA.

10. Dispositif selon l'une quelconque des revendications 7 à 9, **caractérisé en ce que** les moyens d'émission (5) de la décharge électrique comportent une première électrode (6) située au centre du conduit (3) et une seconde électrode constituée par la surface intérieure du conduit (3).

11. Dispositif selon la revendication 10, **caractérisé en ce que** le conduit (3) et la première électrode (6) présentent chacun une section transversale circulaire.

12. Dispositif selon la revendication précédente, **caractérisé en ce que** le canal (1) présente un diamètre compris entre 0.5 mm et 3 mm.

13. Dispositif selon la revendication 10, **caractérisé en ce que** le canal (1) présente une section transversale rectangulaire.

14. Utilisation d'un dispositif selon l'une quelconque des revendications 7 à 13 pour contrôler un écoulement principal (13), l'écoulement principal (13) s'écoulant suivant une direction principale (14) d'écoulement, le dispositif émettant un jet de gaz (18) suivant une direction d'écoulement (9) sécante ou parallèle à la direction principale (14) d'écoulement, le débit massique du jet de gaz (18) étant modulé par le dispositif.

## Patentansprüche

1. Verfahren zum Steuern des Massendurchflusses eines Gasstroms (4) folgende Schritte umfassend:
- Einrichten eines Gasstroms (4) durch einen Kanal (1), wobei der Kanal (1) eine Leitung (3) umfasst, in der die Machzahl des Gasstroms (4) gleich 1 ist, so dass der Strom stromaufwärts der Leitung permanent ist,
- Abgeben mindestens einer elektrischen Entladung in der Leitung (3) derart, dass mindestens eine Plasmazone in dem Gasstrom (4) geschaffen wird,
**dadurch gekennzeichnet, dass** die elektrische Entladung periodisch derart ist, dass der Massendurchfluss des Stroms stromabwärts der Leitung von der elektrischen Ladung über die Temperaturerhöhung des Gasstroms gesteuert wird.

2. Verfahren nach Anspruch 1, **dadurch gekennzeichnet, dass** die Leitung (3) durch eine Verjüngung (20) des Kanals, in dem der Gasstrom (4) eine Machzahl gleich 1 aufweist, gebildet ist.

3. Verfahren nach einem der vorhergehenden Ansprüche, **dadurch gekennzeichnet, dass** die elektrische Entladung eine Dauer von mehr als 10⁻⁷ s hat.

4. Verfahren nach einem der vorhergehenden Ansprüche, **dadurch gekennzeichnet, dass** die elektrische Entladung periodisch ist und eine Frequenz zwischen 1 Hertz und 50 Kilohertz umfasst.

5. Verfahren nach einem der vorhergehenden Ansprüche, **dadurch gekennzeichnet, dass** der Gasstrom (4) einen Massendurchfluss in dem Kanal (1) zwischen 1 g/Sekunde und 100 g/Sekunde hat.

6. Steuerverfahren nach einem der vorhergehenden Ansprüche, **dadurch gekennzeichnet, dass** es außerdem die folgenden Schritte aufweist:
- Lenken des Gasstroms (4) am Ausgang des Kanals (1) zu einem Hauptstrom (13), der in eine gegebene Hauptrichtung (14) fließt, indem der Gasstrom (4) am Ausgang des Kanals (1) derart ausgerichtet wird, dass die Strömungsrichtung (9) des Gasstroms (4) am Ausgang des Kanals (1) die Hauptrichtung (14) schneidet oder zu ihr parallel ist,
- Steuern des Hauptstroms (13), indem der Massendurchfluss des Gasstroms in dem Kanal (1) variiert wird.

7. Vorrichtung zum Modulieren des Massendurchfluss eines Gasstroms (4), wobei die Vorrichtung einen Kanal (1) umfasst, der eine Leitung (3) umfasst, die derart bemessen ist, dass die Geschwindigkeit des Gasstroms (4) in der Leitung (3) gleich 1 Mach ist, und das der Strom stromaufwärts der Leitung permanent ist, Abgabemittel (5) mindestens einer elektrischen Entladung in der Leitung (3), **dadurch gekennzeichnet, dass** die Vorrichtung außerdem Steuermittel umfasst, die geeignet sind, um die Abgabemittel (5) der elektrischen Entladung derart zu steuern, dass die Abgabemittel (5) der elektrischen Entladung eine periodische elektrische Entladung ausgeben und geeignet sind, eine Plasmazone (2) in dem Gasstrom (4) zu schaffen, die den Massendurchfluss des Stroms stromabwärts der Leitung über die Temperaturerhöhung des Gasstroms steuert.

8. Vorrichtung nach dem vorhergehenden Anspruch, **dadurch gekennzeichnet, dass** die Leitung (3) aus einer Verjüngung (20) des Kanals (1) besteht, wobei der Gasstrom (4) in der Leitung (3) eine Machzahl gleich 1 aufweist.

9. Vorrichtung nach einem der Ansprüche 7 bis 8, **dadurch gekennzeichnet, dass** die elektrische Entladung eine Spannung zwischen 1 kV und 50 kV und eine Stärke zwischen 1 mA und 500 mA aufweist.

10. Vorrichtung nach einem der Ansprüche 7 bis 9, **dadurch gekennzeichnet, dass** die Abgabemittel (5) der elektrischen Ladung eine erste Elektrode (6) umfassen, die sich in der Mitte der Leitung (3) befindet, und eine zweite Elektrode, die aus der inneren Oberfläche der Leitung (3) besteht.

11. Vorrichtung nach Anspruch 10, **dadurch gekennzeichnet, dass** die Leitung (3) und die erste Elektrode (6) jeweils einen kreisförmigen Querschnitt aufweisen.

12. Vorrichtung nach dem vorhergehenden Anspruch, **dadurch gekennzeichnet, dass** der Kanal (1) einen Durchmesser zwischen 0,5 mm und 3 mm aufweist.

13. Vorrichtung nach Anspruch 10, **dadurch gekennzeichnet, dass** der Kanal (1) einen rechteckigen Querschnitt aufweist.

14. Verwendung einer Vorrichtung nach einem der Ansprüche 7 bis 13 zum Steuern eines Hauptstroms (13), wobei der Hauptstrom (13) entlang einer Hauptströmungsrichtung (14) strömt, wobei die Vorrichtung einen Gasstrahl (18) entlang einer Strömungsrichtung (9), die die Hauptströmungsrichtung (14) schneidet oder zu ihr parallel ist, abgibt, wobei der Massendurchfluss des Gasstrahls (18) von der Vorrichtung moduliert wird.

## Claims

1. A method for controlling the mass flow rate of a gas stream (4) comprising the following steps:
- establishing a gas stream (4) through a channel (1), the channel (1) comprising a pipe (3) wherein the Mach number of the gas stream (4) is equal to 1, such that the stream be permanent upstream from the pipe,
- emitting at least an electrical discharge in the pipe (3) such as to create at least a plasma area in the gas stream (4),
**characterized in that** the electrical discharge is periodic so that the mass flow rate of the downstream flow from the pipe is controlled by the electrical discharge via the temperature increase of the gas stream.

2. The method according to claim 1, **characterized in that** the pipe (3) is formed by a narrowing (20) of the channel wherein the gas stream (4) exhibits a Mach number equal to 1.

3. The method according to any of the preceding claims, **characterized in that** the electrical discharge has a duration higher than 10⁻⁷ s.

4. The method according to any of the preceding claims, **characterized in that** the electrical discharge is periodic and has a frequency ranging between 1 Hz and 50 kHz.

5. The method according to any of the preceding claims, **characterized in that** the gas stream (4) has a mass flow rate in the channel (1) ranging between 1g/second and 100g/second.

6. The controlling method according to any of the preceding claims, **characterized in that** it further comprises the following steps:
- directing the gas stream (4) at the outlet of the channel (1) towards a main stream (13) flowing in a given main direction (14), by orienting the gas stream (4) at the outlet of the channel (1) such that the flow direction (9) of the gas stream at the outlet of the channel (1) be secant or parallel to/with the main direction (14),
- controlling the main stream (13) by making the mass flow rate of the gas stream in the channel (1) vary.

7. A device for modulating the mass flow rate of a gas stream (4), the device comprising a channel (1) comprising a pipe (3) sized such that the speed of the gas stream (4) in the pipe (3) be equal to 1 Mach and that the flow be permanent upstream from the pipe, means for emitting at least an electrical discharge in the pipe (3), **characterized in that** the device further comprises control means capable of piloting the means (5) for emitting the electric discharge so that the means (5) for emitting the electric discharge emit a periodic electrical discharge being able to create a plasma area (2) in the gas stream (4) controlling the mass flow rate of the flow downstream from the pipe via the increase in temperature of the gas stream.

8. The device according to the preceding claim, **characterized in that** the pipe (3) is constituted by a narrowing (20) of the channel (1), the gas stream (4) exhibiting a Mach number equal to 1 in the pipe (3).

9. The device according to any of claims 7 to 8, **characterized in that** the electrical discharge has a voltage ranging between 1 kV and 50kV and an intensity ranging between 1 mA and 500 mA.

10. The device according to any of claims 7 to 9, **characterized in that** the means (5) for emitting the electrical discharge comprise a first electrode (6) located in the center of the pipe (3) and a second electrode constituted by the internal surface of the pipe (3).

11. The device according to claim 10, **characterized in that** the pipe (3) and the first electrode (6) each exhibit a circular transversal section.

12. The device according to the preceding claim, **characterized in that** the channel (1) exhibits a diameter ranging between 0.5 mm and 3 mm.

13. The device according to claim 10, **characterized in that** the channel (1) exhibits a rectangular transversal section.

14. A use of a device according to any of claims 7 to 13 for controlling a main stream (13), the main stream (13) flowing in a main flow direction (14), the device emitting a gas jet (18) in a flow direction (9) that is secant to or parallel with the main flow direction (14), the mass flow rate of the gas jet (18) being modulated by the device.
